# DEMANDE DE BREVET EUROPEEN

(11) **EP 1 087 634 A1**
(43) Date de publication de la demande: **28.03.2001**
(21) Numéro de dépôt: 99460059.1
(22) Date de dépôt: 27.09.1999
(51) Int. Cl.: H04Q 7/38

(54) **Procédé de gestion de transmission entre un terminal et une station de base**

(71) Demandeur: TRT LUCENT TECHNOLOGIES, 75008 Paris (FR)
(72) Inventeur: Guerard, Christophe, 76960 Notre Dame de Bondeville (FR); Baillarin, Simon, 76000 Rouen (FR)
(74) Mandataire: Ballot, Paul

(57) **Abrégé**

La présente invention concerne un procédé de gestion d'une transmission d'informations entre un terminal de télécommunication comportant une radio dite 'blind" et une station de base d'un réseau de télécommunications, ledit procédé servant à changer de couple porteur lors de cette transmission. Pour passer d'un premier couple porteur vers un second couple porteur, on prévoit selon l'invention de couper la programmation de la radio 'blind" sur le premier couple porteur pendant la recherche du second couple porteur. Cela permet ainsi d'augmenter sensiblement le nombre de nouveaux couples porteurs possibles.

Application : domaine des réseaux de télécommunication sans fil utilisant une radio 'blind".

## Description

La présente invention concerne un procédé de gestion d'une transmission d'informations entre un terminal de télécommunication comportant une radio dite "blind" et une station de base d'un réseau de télécommunications, ledit procédé servant à changer de couple porteur lors de cette transmission. Elle trouve son application dans le domaine des réseaux de télécommunication sans fil utilisant une radio dite "blind".

L'invention sera décrite en référence à un réseau de télécommunication DECT sans qu'on puisse y voir une quelconque limitation de la portée de l'invention à ce standard. Dans les systèmes DECT, les communications sont véhiculées sur des fréquences porteuses ayant chacune une structure de trame. Trois bandes de fréquence sont allouées au système DECT. Chacune de ces bandes de fréquence est découpée en dix fréquences porteuses. Chaque porteuse est divisée en 24 intervalles de temps dont douze servent à la transmission dans le sens montant (terminal vers station de base) et les douze autres à la transmission dans le sens descendant (station de base vers terminal). De manière classique, la liaison entre un terminal et sa station de base est effectuée, dans le sens descendant, sur un premier couple porteur- intervalle de temps n et fréquence porteuse c - et, dans le sens montant, sur un autre couple porteur dépendant du premier couple - intervalle de temps n+12 et fréquence porteuse c -.

Dans la suite de la description, on désignera par couple porteur (appelé communément "bearer" dans la littérature anglo-saxonne) le couple formé d'au moins un intervalle de temps dans la trame radio et d'une fréquence porteuse, sur lequel est établie une liaison radio. Dans le cas d'une communication téléphonique (voix), les couples porteurs comporte chacun un unique intervalle de temps. Pour le transport de données, les couples porteurs peuvent comporter plusieurs intervalles de temps consécutifs. Dans la suite de la description, le couple porteur formé de l'intervalle de temps n et de la fréquence porteuse c est noté [n;c] et le couple porteur formé des intervalles de temps n et n+1 et de la fréquence porteuse c est noté [(n,n+1);c].

Lorsque des interférences viennent perturber la liaison radio entre le terminal et la station de base, il est parfois nécessaire de changer de couple porteur. Le terminal se met alors à la recherche d'un nouveau couple porteur sur lequel la liaison radio ne sera pas perturbée. Lorsqu'un nouveau couple porteur a été trouvé, la communication entre le terminal et la station de base est transférée sur ce nouveau couple porteur en reprogrammant la radio du terminal et de la station de base sur ce nouveau couple.

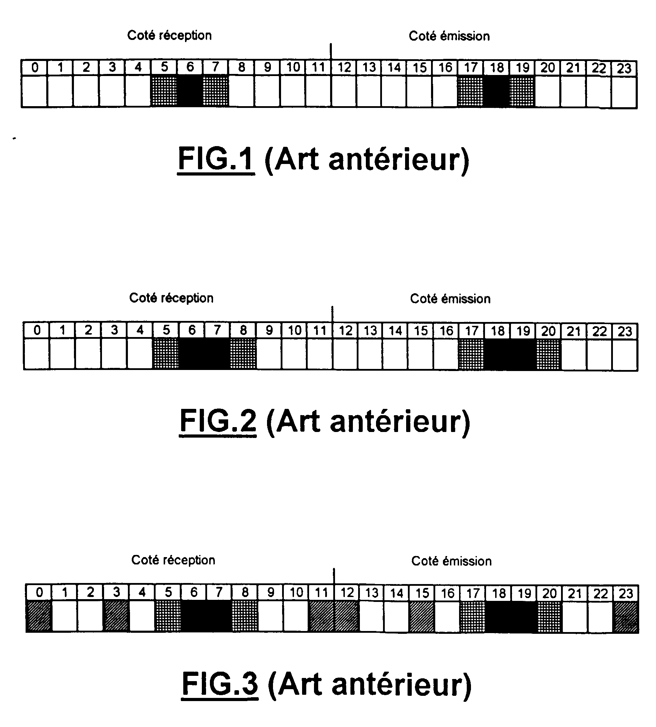

Pendant la recherche du nouveau couple porteur, la radio du terminal doit traiter à la fois les signaux du couple porteur de la liaison perturbée et ceux du nouveau couple porteur possible. Etant donné ce double traitement, il se trouve que l'utilisation d'une radio dite "blind" dans les terminaux limite fortement le nombre de nouveaux couples porteurs possibles. En effet, les radios dites "blind" désignent des radios qui ne sont pas capables de traiter les signaux contenus dans deux intervalles de temps consécutifs. Il en résulte qu'une telle radio, appelée également radio blind, ne peut rechercher un nouveau couple porteur comportant un intervalle de temps qui soit adjacent à celui du couple porteur déjà utilisé. Cette impossibilité est illustrée sur une trame DECT représentée à la figure 1. Dans cette trame DECT de fréquence porteuse c, les couples porteurs [6;c] et [18;c] sont alloués à la transmission d'informations entre le terminal et la station de base respectivement dans le sens descendant et dans le sens montant. Si, pour une raison quelconque, le couple porteur [6;c] (ou le couple [18;c]) doit être changé, la radio "blind" du terminal n'est pas capable de traiter à la fois le couple porteur [6;c] et le couple porteur [5;c] ou [7;c] (resp [17;c] ou [19;c]). Elle ne sera pas non plus en mesure le couple porteur [5;c'], [6;c'] ou [7;c'] (resp. [17;c'], [18;c'] ou [19;c']) avec c' désignant une fréquence porteuse différente de c. Le terminal doit donc rechercher un nouveau couple porteur parmi les autres couples porteurs disponibles. Les nouveaux couples porteurs [5;c] et [7;c] (resp. [17;c] et [19;c]) interdits par la radio "blind" sont quadrillés dans la trame DECT de la figure 1.

Par conséquent, une radio "blind" limite de façon sensible les possibilités de changement de couple porteur. Il peut en résulter des situations de blocage lorsque les couples porteurs restants sont déjà utilisés pour d'autres communications.

A noter que, dans la figure 1, les échanges entre le terminal et la station de base sont effectués dans chaque sens sur un unique intervalle de temps. Ce protocole d'échanges de données est communément appelé LU1. Il est notamment utilisé pour le transport de la voix (conversation téléphonique). La figure 2 illustre un deuxième protocole d'échanges de données appelé communément LU7, dans lequel les échanges sont effectués dans chaque sens sur deux intervalles de temps consécutifs. Chaque couple porteur comporte alors deux intervalles de temps adjacents et une fréquence porteuse. Par souci de clarté, on parlera alors de couple porteur double pour les distinguer des couples porteurs simples comportant un unique intervalle de temps. La figure 2 représente une trame DECT de fréquence porteuse c. Un terminal et une station de base communiquent sur le couple porteur double [(6,7);c] dans le sens descendant et sur le couple porteur double [(18,19);c] dans le sens montant. Selon ce protocole, le numéro du premier des deux intervalles de temps consécutifs est nécessairement pair. Dans cet exemple, si on considère que le terminal est équipé d'une radio "blind", les nouveaux couples porteurs doubles comportant les couples porteurs simples [5;c ou c'] et [8 ;c ou c'] sont interdits. Par ailleurs, étant donné que le numéro du premier intervalle de temps du nouveau couple porteur double doit être pair, le choix des nouveaux couples porteurs doubles est encore plus restreint.

Si on suppose qu'aucun autre terminal n'est en communication, il reste 3x10 nouveaux couples porteurs doubles possibles :
[(0,1);c],
[(2,3);c] où c est une fréquence
[(10,11);c] porteuse quelconque

Il peut se produire des situations de blocage lorsque d'autres terminaux sont en communication. Un exemple de blocage sur une fréquence porteuse c est illustré par la figure 3. Le couple porteur double [(6,7);c] est utilisé pour le transport de données et les couples porteurs simples [0;c], [3;c] et [11;c] (hachurés dans la trame de la figure 3) sont utilisés pour le transport de communications téléphoniques. Si, pour une raison quelconque, il est nécessaire de changer le couple porteur double, il n'existe aucune possibilité sur cette porteuse en raison des contraintes imposées par la radio blind et le protocole LU7.

Un but de l'invention est de proposer un procédé de gestion de transmission permettant de diminuer le nombre des situations de blocage lors d'un changement de couple porteur.

Un autre but est de proposer un procédé permettant d'augmenter le trafic dans un réseau de télécommunications comportant des terminaux équipés de radios "blind".

Aussi, selon l'invention, on propose de couper la radio "blind" du terminal pendant la recherche du nouveau couple porteur de manière à avoir la possibilité d'établir la liaison sur un nouveau couple porteur ayant un intervalle de temps adjacent à celui du couple porteur déjà utilisé.

A cet effet, l'invention a pour objet un procédé de gestion d'une transmission d'informations par trames radios successives entre un terminal de télécommunication comportant une radio dite "blind" et une station de base d'un réseau de télécommunications, chaque trame radio comportant une pluralité de couples porteurs définis chacun par au moins un intervalle de temps dans la trame radio et une fréquence porteuse, ladite transmission d'informations étant effectuée sur un premier couple porteur, ledit procédé servant à changer de couple porteur lors de ladite transmission et comportant une étape de recherche d'un nouveau couple porteur disponible et une étape de programmation de la radio dite "blind" sur ledit nouveau couple porteur, caractérisé en ce que ladite étape de recherche s'opère sur un nombre limité de trames radio et en ce que, pendant cette étape, la programmation de la radio dite "blind" sur ledit premier couple porteur est interrompue.

De cette manière, les nouveaux couples porteurs peuvent être définis sur des intervalles de temps adjacents à celui (ou à ceux dans le cas d'un premier couple porteur double) du premier couple porteur.

Selon un mode réalisation préféré, les informations contenues dans les trames radio non reçues par le terminal pendant l'étape de recherche sont sauvegardées dans une mémoire tampon de la station de base pendant cette étape puis retransmises au terminal après établissement de la liaison sur le nouveau couple porteur.

D'autres caractéristiques et avantages de l'invention apparaîtront à la lecture de description détaillée qui suit et qui est faite en référence aux dessins annexés, parmi lesquels :
- les figures 1, 2 et 3, déjà décrites, montrent les nouveaux couples porteurs possibles d'un terminal équipé d'une radio "blind" dans l'art antérieur;
- la figure 4 montre les nouveaux couples porteurs possibles d'un terminal équipé d'une radio "blind" lorsqu'on applique le procédé de gestion de transmission de l'invention ;
- la figure 5 montre un changement de couple porteur selon l'invention d'un couple porteur double de la figure 4 ;
- la figure 6 représente une mémoire tampon d'une station de base capable de sauvegarder le contenu de huit trames DECT; et
- la figure 7 montre les informations contenues dans un intervalle de temps d'une trame DECT.

Afin de rendre la description plus claire, on appelle premier couple porteur, le couple porteur sur lequel est établie la liaison avant changement de couple porteur.

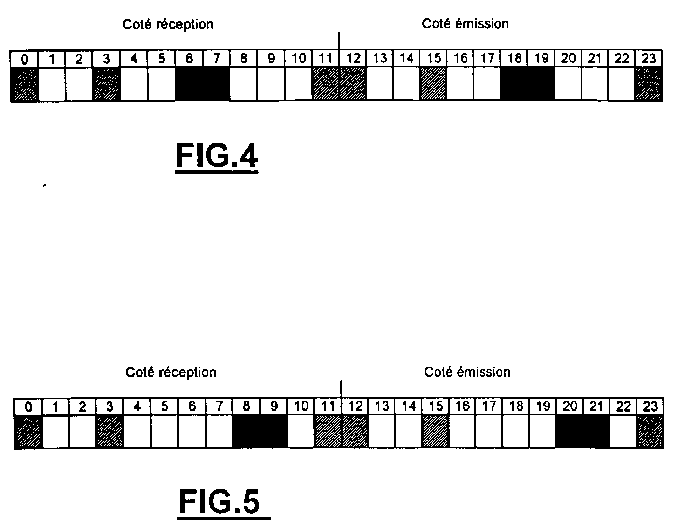

Selon l'invention, la programmation de la radio "blind" du terminal sur le premier couple porteur est interrompue pendant la recherche du nouveau couple porteur. Ainsi, les contraintes imposées par la radio "blind" du terminal n'interviennent plus dans le changement de couple porteur. Ainsi, dans l'exemple de la figure 3, les nouveaux couples porteurs [5;c] et [8;c] ne sont plus interdits. Cette nouvelle situation est illustrée par la figure 4.

On peut alors envisager de transférer la communication sur les nouveaux couples porteurs doubles [(4,5);c] ou [(8,9);c], ce qui était impossible dans l'art antérieur. Sur la figure 5, la communication a été transférée sur le nouveau couple porteur [(8,9);c].

En se référant de nouveau la figure 2, le fait d'interrompre la programmation de la radio "blind" sur le premier couple porteur pendant la recherche permet de faire passer le nombres de nouveaux couples porteurs possibles de 3x10 à 5x10, ce qui correspond à une augmentation de 67%.

L'interruption de la programmation de la radio "blind" sur le premier couple porteur n'est opérée que pendant un nombre limité de trames radio. Dans le cas du transport de communications téléphoniques selon le protocole LU1 (figure 1), l'absence de quelques trames n'est pas perceptible par l'être humain. Il n'est donc pas nécessaire de les sauvegarder.

En revanche, dans le cas du transport de données selon le protocole LU7 (figure 4), cette absence de trames radio n'est pas acceptable. Par conséquent, les données non reçues par le terminal pendant l'interruption de programmation de sa radio sur le premier couple porteur doivent être sauvegardées dans une mémoire tampon de la station de base. Les données sauvegardées pendant l'étape de recherche du nouveau couple porteur seront retransmises ensuite par morceaux au terminal sur le nouveau coupleur avec les données des trames suivantes.

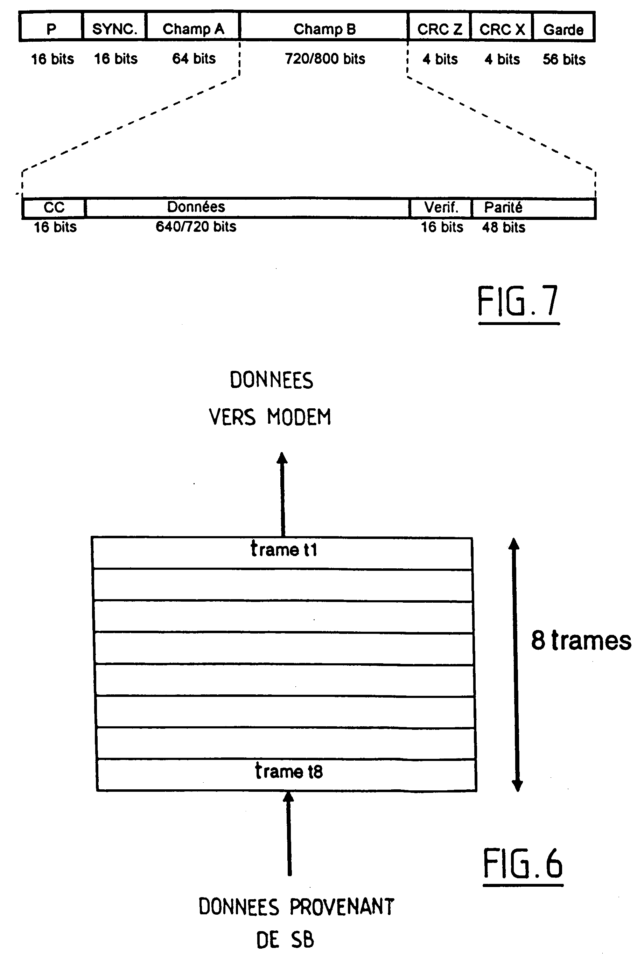

La mémoire tampon utilisée pour la sauvegarde des données non reçues est généralement déjà présente dans les stations de base. Elle sert habituellement à sauvegarder les données en cas de demande de répétition (ARQ) pour la correction d'erreurs. Un exemple de mémoire tampon est montré à la figure 6. Elle comporte huit registres capables de mémoriser chacun les données contenues dans un intervalle de temps d'une trame DECT. Avec cette mémoire tampon, la programmation de la radio "blind" peut être interrompue pendant huit trames radio au maximum sans perte d'informations.

Ainsi, les données non transmises sont sauvegardées dans cette mémoire tampon. Une fois la liaison transférée sur le nouveau couple porteur, ces données sont ensuite retransmises petit à petit vers le terminal avec les données courantes.

Les informations contenues dans un intervalle de temps d'une trame DECT sont montrées à la figure 7. Un intervalle de temps comporte :
- un préambule P de 16 bits ;
- un mot de synchronisation de 16 bits ;
- un champ A de 64 bits ;
- un champ B de 720 ou 800 bits ;
- un mot de contrôle CRC X de 4 bits ;
- un mot de contrôle CRC Z de 4 bits ;
- un espace de garde de 56 bits.

Les données sont contenues dans le champ B. Ce champ se compose de :
- un champ de contrôle CC de 16 bits ;
- un champ de données de 640 ou 720 bits ;
- un mot de vérification de 16 bits ;
- un code de parité de 48 bits.

Ainsi, le champ B peut contenir 720 ou 800 bits de données. Aussi, pour retransmettre les données sauvegardées dans la mémoire tampon, on fait passer le champ B des trames courantes de 720 à 800 bits pour évacuer un huitième (1/8) des données d'une trame sauvegardée (soit 80 bits) à chaque trame courante.

A noter bien entendu que, s'il n'existe pas de nouveau couple porteur disponible en raison d'une saturation du réseau, la radio "blind" est reprogrammée sur le premier couple porteur après l'étape de recherche et les données non reçues par le terminal pendant l'étape de recherche sont retransmises ensuite avec les trames courantes de la même manière que précédemment.

## Revendications

1. Procédé de gestion d'une transmission d'informations par trames radios successives entre un terminal de télécommunication comportant une radio dite "blind" et une station de base d'un réseau de télécommunications, chaque trame radio comportant une pluralité de couples porteurs définis chacun par au moins un intervalle de temps dans la trame radio et une fréquence porteuse, ladite transmission d'informations étant effectuée sur un premier couple porteur, ledit procédé servant à changer de couple porteur lors de ladite transmission et comportant une étape de recherche d'un nouveau couple porteur disponible et une étape de programmation de la radio dite "blind" sur ledit nouveau couple porteur, caractérisé en ce que ladite étape de recherche s'opère sur un nombre limité de trames radio et en ce que, pendant cette étape, la programmation de la radio dite "blind" sur le premier couple porteur est interrompue.

2. Procédé selon la revendication 1, caractérisé en ce que, pendant ladite étape de recherche, les informations non reçues par le terminal sont sauvegardées dans une mémoire tampon de la station de base et sont transmises ultérieurement pendant la transmission des informations sur ledit nouveau couple porteur.

3. Procédé selon la revendication 2, caractérisé en ce que, si ladite mémoire tampon comporte m registres tampon capables de sauvegarder chacun une trame radio, l'étape de recherche s'opère sur m trames radio au maximum sans perte d'informations.
